(19) Europäisches Patentamt
European Patent Office
Office européen des brevets

(11) **EP 4 273 736 A1**

(12) **EUROPEAN PATENT APPLICATION**

(43) Date of publication:
**08.11.2023 Bulletin 2023/45**

(21) Application number: **22171631.9**

(22) Date of filing: **04.05.2022**

(51) International Patent Classification (IPC):
**G06F 40/106** (2020.01)   **G06F 40/137** (2020.01)
**G06F 40/14** (2020.01)   **G06F 40/284** (2020.01)
**G06F 40/295** (2020.01)   **G06N 3/02** (2006.01)

(52) Cooperative Patent Classification (CPC):
**G06F 40/106; G06F 40/137; G06F 40/14;
G06F 40/284; G06F 40/295; G06N 3/0442;
G06N 3/0455; G06N 3/048; G06N 3/088**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Energy Global GmbH & Co. KG
81739 München (DE)**

(72) Inventors:
• **Dalmia, Aman
700020 Kolkata (IN)**
• **Hildenhagen, David
46459 Rees (DE)**
• **Härter, Leon-Alexander
6813 DD Arnhem (NL)**
• **Iyer, Vignesh
400089 Mumbai (IN)**
• **Amin, Fakabbir
560100 Bangalore (IN)**
• **Kulkarni, Srinidhi
560092 Bangalore (IN)**

(54) **SYSTEM AND METHOD FOR MANAGING INFORMATION PRESENT IN TECHNICAL DOCUMENTS**

(57)   A system and method for managing information present in a technical document is disclosed. The method comprises receiving, by a processing unit (120), the technical document from a source. Further, the technical document is parsed to extract at least one heading hierarchy associated with at least one sentence in the technical document. The heading hierarchy is further to generate a heading embedding for the at least one sentence. The heading embedding and a text embedding of the at least one sentence are used to generate a context embedding for the at least one sentence. Further, a classifier model is applied to the context embedding to generate output data indicative of a class associated with the at least one sentence. The at least one sentence is further selectively provided to the one or more output devices (117) based on the class of the at least one sentence.

FIG 7

EP 4 273 736 A1

**Description**

The present invention relates to knowledge management, and more particularly relates to a system, apparatus and method for managing information present in technical documents.

In any given industry, lot of documentation may be present. Often, a human operator may be required to go through a large document manually to classify sentences present in the document, into different categories for ease of understanding. Since most such documents are stored in Portable Document Format (PDF), accurate and reliable extraction of hierarchical information is crucial.

In an example, an organization may receive requirements from various buyers with respect to its products or services. The buyer may supply a document comprising detailed information about the product or service requirements along with technical or non-technical details. To create the best bid, many stakeholders within the organization may be involved. For example, the stakeholders may include an engineering team, a Research team, a marketing team, a sales team, a legal team, a compliance team, etc. To understand the requirements, each of the stakeholders may have to go through the entire document and find sections of text relevant for them. This is a time-consuming process and may be prone to human errors. Further, some terms and conditions or requirement features are placed in a section which might be overlooked by the respective team.

In another example, product-based organizations receive many bids from external vendors for a particular product or service. For a given product or service, several Key Performance Indicators (KPIs) are considered before accepting a vendor's bid. However, obtaining the KPIs from lengthy bid documents is a tedious task. It would be easier for a reviewer of the document, if the relevant KPIs are highlighted, so as to perform further analytics based on the KPIs.

In the examples described above, it is a challenge to get the context by reading a sentence alone. For example, the sentence "The risk is considered low" may be interpreted differently by a reader having a background in Finance and another reader having a background in Engineering. In the absence of context, it is difficult for a reader identify the topic that the sentence relates to. Similarly, when Natural Language Processing (NLP) techniques are applied to sentences in technical documents, the sentences may be erroneously processed in the absence of context. This leads to erroneous interpretation of data present in the technical document. Furthermore, such erroneous interpretation may also render the data unusable for further analysis.

In light of the above, there exists a need for managing information present in technical documents, based on context.

Therefore, it is an object of the present invention to provide a system, apparatus and method for managing information present in technical documents.

The object of the present invention is achieved by a computer-implemented method for managing information present in a technical document as disclosed herein.

The method comprises receiving, by a processing unit, the technical document from a source. The technical document comprises text-based specifications associated with a technical installation. The method further comprises parsing the technical document to extract at least one heading hierarchy associated with at least one sentence in the technical document. In an embodiment, parsing the technical document to extract at least the heading hierarchy associated with the at least one of the sentences comprises, identifying a plurality of text lines present in the technical document based on coordinates of the technical document. Each of the text lines comprise text present in a row of the technical document. Further, each of the text lines are classified into at least one of a heading and a sentence, based on at least one characteristic of the text line. Further, a heading hierarchy is generated from one or more text lines classified as headings, using a predefined rule. In a further embodiment, the method further comprises mapping each of the text lines classified as a sentence, to at least one immediately preceding heading, using metadata of the immediately preceding heading.

Advantageously, the present invention parses a technical document to segregate headings from text lines. Further, the mapping of a text line to the immediately preceding heading adds context to the text line.

The method further comprises using the heading hierarchy to generate a heading embedding for the at least one sentence, wherein the heading embedding is a vector representation of predefined length corresponding to the heading hierarchy.

The method further comprises using the heading embedding and a text embedding of the at least one sentence to generate a context embedding for the at least one sentence. In an embodiment, the text embedding of the at least one sentence is generated using a first embedding model. In an embodiment, the heading embedding for the at least one sentence is generated from the heading hierarchy using a second embedding model. In an embodiment of the present invention, using the heading embedding and the text embedding of the at least one sentence to generate the context embedding for the at least one sentence comprises, concatenating the heading embedding and the text embedding of the at least one sentence to form the context embedding for the sentence.

Advantageously, the present invention uses heading hierarchies to generate an encoding that indicates a context associated with the at least one sentence.

The method further comprises applying a classifier model to the context embedding to generate output data. The output data is indicative of a class associated with the at least one sentence. In an embodiment, the classifier model is trained based on at least one of Artificial Neural Networks, decision trees, Naive Bayes classifiers, clustering algorithms and Support Vector Machines.

Advantageously, classification of the sentence based context embedding provides a mechanism for context-aware sentence classification.

The method further comprises selectively providing the at least one sentence to one or more output devices based on the class of the at least one sentence. In an embodiment of the present invention, selectively providing the at least one sentence to the one or more output devices based on the class of the at least one sentence, comprises identifying a colour-code corresponding to the class of the sentence from a lookup table. Further, an area covered by the sentence in the technical document is highlighted based on the colour-code. The technical document comprising the highlighted area is further displayed via the one or more output devices.

Advantageously, the present invention facilitates highlighting of technical documents based on context-aware sentence classification, for guiding a reader to context-relevant text in the technical document.

In another embodiment of the present invention, selectively providing the at least one sentence to the one or more output devices based on the class of the at least one sentence, comprises, selectively storing the sentence in a database based on the class of the sentence. Further, the selectively stored sentence is transmitted to the one or more output devices for displaying to a user.

Advantageously, the present invention facilitates automatically identifying sentences relevant for specific stakeholders, and in selectively showing only the relevant sentences to the stakeholders.

In an embodiment of the present invention, a text analysis algorithm is further identified corresponding to the determined class of the at least one sentence. Further, the identified text analysis algorithm is used to analyse the sentence for identifying one or more technical parameters mentioned in the sentence.

In a further embodiment, the one or more technical parameters identified are used to configure a machine-executable simulation instance of a system design of the technical installation. Further, a behaviour of the technical installation is simulated, based on the system design. Further, at least one key performance indicator corresponding to the one or more technical parameters is computed based on an outcome of the simulation. Further, a notification indicative of the at least one key performance indicator is provided on the one or more output devices.

Advantageously, the present invention facilitates extraction of technical parameters from a technical document, without manual intervention. Further, the extracted technical parameters are automatically used to simulate the system design for determining the key performance indicators. Therefore, manual efforts in understanding the technical parameters and configuring of the system design based on the technical parameters, are eliminated.

Disclosed herein is also an apparatus for managing information present in a technical document, in accordance with an embodiment of the present invention. The apparatus comprises one or more processing units, and a memory unit operatively coupled to the one or more processing units. The memory unit comprises an information management module stored in the form of machine-readable instructions executable by the one or more processing units. The information management module is configured to perform method steps described above.

Disclosed herein is also a system for managing information present in a technical document, in accordance with an embodiment of the present invention. The system comprises a source configured to provide a technical document. The technical document comprises text-based specifications associated with a technical installation. The system further comprises an apparatus as described above, communicatively coupled to the source. The apparatus is configured to manage information present in the technical document, according to any of the method steps described above. The term 'sources' as used herein, refer to electronic devices configured to obtain and transmit the operational data to the apparatus. The system further comprises one or more output devices communicatively coupled to the apparatus.

The object of the present invention is also achieved by a computer-readable medium, on which program code sections of a computer program are saved, the program code sections being loadable into and/or executable by a processor which performs the method as described above when the program code sections are executed.

The realization of the invention by a computer program product and/or a non-transitory computer-readable storage medium has the advantage that computer systems may be easily adopted by installing computer program in order to work as proposed by the present invention.

The computer program product may be, for example, a computer program or comprise another element apart from the computer program. This other element may be hardware, for example a memory device, on which the computer program is stored, a hardware key for using the computer program and the like, and/or software, for example a documentation or a software key for using the computer program.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:

FIG 1A illustrates a block diagram of a system for managing information present in technical documents, in accordance with an embodiment of the present invention;

FIG 1B illustrates a block diagram of an apparatus for managing information present in technical documents, in accordance with an embodiment of the present invention;

FIG 2 shows a method of managing information present in a technical document, in accordance with an embodiment of the present invention;

FIG 3A shows a flowchart of a method for extracting text from a technical document in PDF, in accordance with an exemplary embodiment of the present invention;

FIG 3B shows a flowchart of method for generating heading hierarchies, in accordance with the present invention;

FIG 3C shows a flowchart of a method 345 for demarcating sentences in the technical document, in accordance with an embodiment of the present invention;

FIG 4 illustrates an architecture of a Bidirectional Encoder Representations from Transformers model for generating text embeddings for sentences, in accordance with an exemplary embodiment of the present invention;

FIG 5 illustrates a block diagram of an autoencoder model for generating heading embeddings corresponding to heading hierarchies, in accordance with an embodiment of the present invention;

FIG 6 illustrates an embodiment of an artificial neural network; and

FIG 7 shows a workflow for classifying sentences based on text embeddings and heading embeddings, in accordance with an exemplary embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

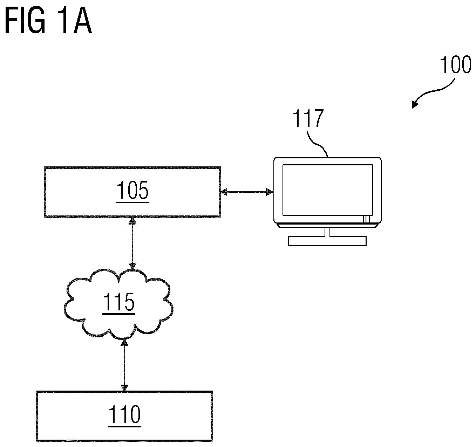

FIG 1A illustrates a block diagram of a system 100 for managing information present in technical documents, in accordance with an embodiment of the present invention.

The system 100 comprises an apparatus 105 and client device 110. Non-limiting examples of client devices 110 include personal computers, mobile phones, personal digital assistants and workstations. In the present embodiment, the apparatus 105 is a server. The client device 110 is connected to the apparatus 105 via a network 115. Non-limiting examples of the network 115 include local area network (LAN), wide area network (WAN), WiFi, etc.

The client device 110 includes a device configured to receive one or more technical documents from a user. The one or more technical documents may include text-based specifications of a technical installation. Here, the term "text-based specifications" refers to both unstructured text and structured text comprising technical parameters associated with the technical installation.

In an example, the one or more technical documents may be stored on the client device 110 in soft copy formats. In another example, the user may upload the technical document to the client device 110 through peripheral devices such as scanners, hard disks, CD-ROMs and so on. The client device 110 may also be configured to convert the technical document to a Portable Document Format (PDF) that is suitable for processing at the apparatus 105. The client device 110 may also include a user device associated with the user.

The apparatus 105 may further process the technical document to provide context-relevant information to the user via a user interface associated with one or more output devices 117. The user-interface may be configured to display the context-relevant information on the one or more output devices 117, using at least one of a web-based application and a client-based application installed on the one or more output devices 117 communicatively coupled to the apparatus 105. It must be understood by a person skilled in the art that, in some embodiments, the client device 110 and the output device 117 may be the same.

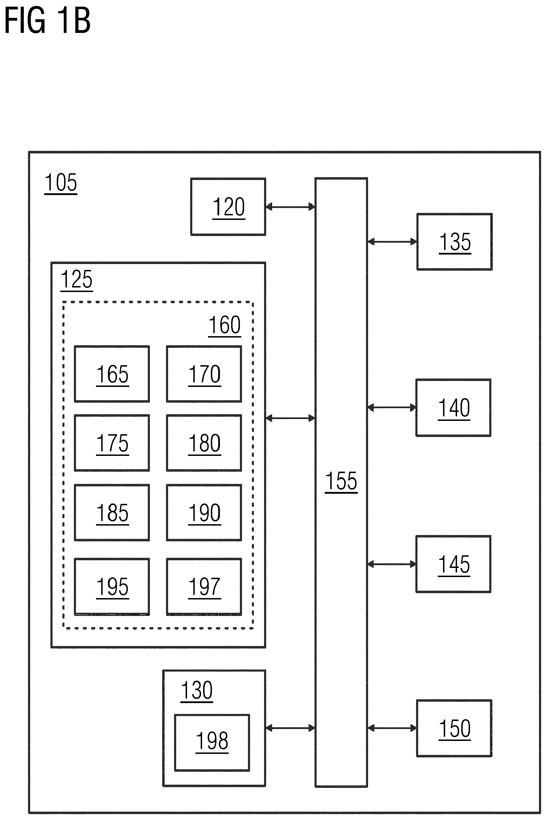

The apparatus 105 comprises one or more processing units 120, a memory unit 125, a storage unit 130, a communication unit 135, a network interface 140, an input unit 145, an output unit 150, a standard interface or bus 155, as shown in FIG 1B. The apparatus 105 may be a (personal) computer, a workstation, a virtual machine running on host hardware, a microcontroller, or an integrated circuit. As an alternative, the apparatus 105 may be a real or a virtual group of computers (the technical term for a real group of computers is "cluster", the technical term for a virtual group of computers is "cloud"). The term 'processing unit', as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit.

The one or more processing units 120 may also include embedded controllers, such as generic or programmable logic devices or arrays, application specific integrated circuits, single-chip computers, and the like. In general, the one or more processing units 120 may comprise hardware elements and software elements. The one or more processing units 120 may be configured for multithreading, i.e., the processing unit 120 may host different calculation processes at the same time, executing the either in parallel or switching between active and passive calculation processes.

The memory unit 125 may include one or more of a volatile memory and a non-volatile memory. The memory unit 125 may be coupled for communication with the processing unit 120. The processing unit 120 may execute instructions and/or code stored in the memory unit 125. A variety of computer-readable storage media may be stored in and accessed from the memory unit 125. The memory unit 125 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. The memory unit 125 comprises a knowledge management module 160 that may be stored in the memory unit 125 in the form of machine-readable instructions and executable by the processing unit 120. These machine-readable instructions when executed by the processing unit 120 causes the processing unit 120 to perform functions associated with managing information present in technical documents.

The memory unit 125 stores an information management module 160. The information management module 160 comprises a preprocessing module 165, a parsing module 170, an embedding module 175, a context module 180, a classification module 185, a simulation module 190, text analysis module 195 and a notification module 197.

The preprocessing module 165 is configured to receive the technical document from a source. The preprocessing module 165 may be further configured to convert the technical document in PDF to a raw JSON format. The parsing module 170 is configured to parse the technical document, in raw JSON format, to extract at least one heading hierarchy associated with at least one sentence in the technical document.

The embedding module 175 is configured to use the heading hierarchy to generate a heading embedding for the at least one sentence. The heading embedding is a vector representation of predefined length corresponding to the heading hierarchy. The embedding module 175 is further configured to generate a text embedding for the at least one sentence. The text embedding is a vector representation of predefined length corresponding to the at least one sentence. The context module 180 is configured to use the heading embedding and a text embedding of the at least one sentence to generate a context embedding for the at least one sentence.

The classification module 185 is configured to apply a classifier model to the context embedding to generate output data. The output data is indicative of a class associated with the at least one sentence. The term "class" as used herein refers to a predefined category attributed to the sentence, based on a context. For example, the predefined categories may include, "Engineering", "Compliance", "Finance". The notification module 197 is configured to provide the output data indicative of the class of the at least one sentence to one or more output devices 117. The one or more output devices 117 may further configure the user-interface to display the class of the at least one sentence. The text analysis module 195 is configured to identify a text analysis algorithm corresponding to the determined class of the at least one sentence, and using the identified text analysis algorithm to parse the sentence for identifying one or more technical parameters mentioned in the sentence.

The simulation module 190 is configured to using the one or more technical parameters identified to configure a machine-executable simulation instance of a system design of the technical installation. The simulation module 190 is further configured to simulate a behaviour of the technical installation, based on the system design, and to compute at least one key performance indicator corresponding to the one or more technical parameters based on an outcome of the simulation. The notification module 197 is further configured to generate a notification indicative of the at least one key performance indicator. The notification is further transmitted to the one or more output devices 117 for displaying via the user interface.

The storage unit 130 comprises a non-volatile memory which stores the database 198. The database 198 may store, for example, look up tables storing colour-codes corresponding to various classes of sentences, indications of text analysis algorithms corresponding to each of the classes, for IP addresses of the output devices 117. The input unit 145 may include input means such as keypad, touch-sensitive display, camera, etc. capable of receiving inputs. The output unit 150 may include output means such as monitors, Human Machine Interfaces etc. The bus 155 acts as interconnect between the processing unit 120, the memory unit 125, the storage unit 130, and the network interface 140. The communication unit 135 enables the apparatus 105 to communicate with the client device 110 and the one or more output devices 117. The communication unit 135 may support different standard communication protocols such as Transport Control Protocol/Internet Protocol (TCP/IP), Profinet, Profibus, Bluetooth and Internet Protocol Version (IPv). The network interface 140 enables the apparatus 105 to communicate with the client device 110 and the one or more output devices 117 over the network 115.

The output device 117 in accordance with an embodiment of the present invention includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

One of various commercial operating systems, such as a version of Microsoft Windows™, may be employed if suitably modified. The operating system is modified or created in accordance with the present invention as described.

Those of ordinary skilled in the art will appreciate that the hardware depicted in FIGS 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

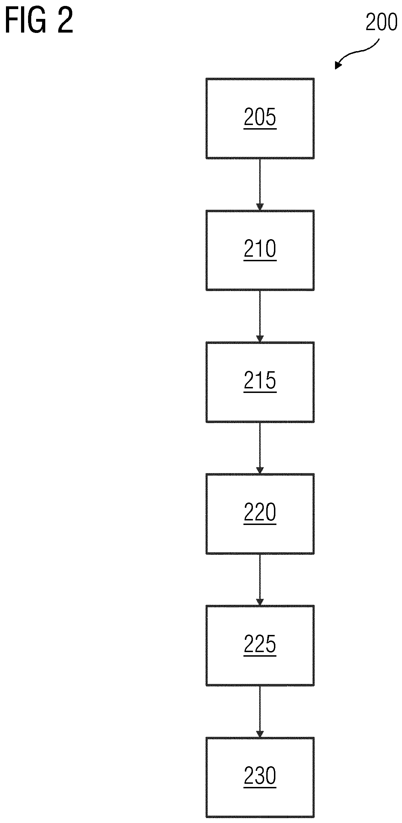

FIG 2 shows a method 200 of managing information present in a technical document, in accordance with an embodiment of the present invention. The method 200 comprises steps 205 to 230, and is explained in conjunction with FIGS 1A and 1B.

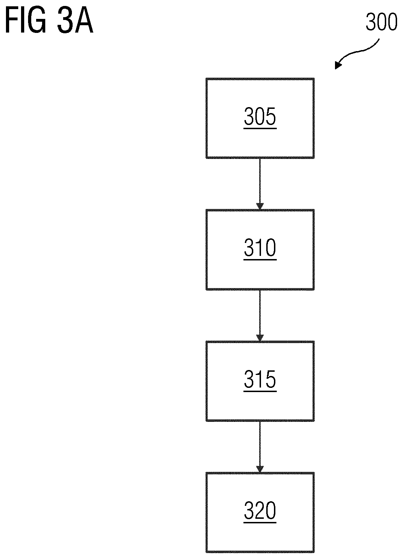

At step 205, a technical document comprising technical parameters associated with a technical installation is received, from a source, by the processing unit 120. Here, the term "source" may refer to the client device 110, a local database or a remote storage location containing one or more technical documents. The technical document comprises text-based specifications associated with a technical installation. Further, text present in the technical document is extracted using a text extraction tool. In addition, the text extraction tool is also configured to detect font, colour and position of a specific text within the technical document. The process of extracting text from the technical document in PDF using the text extraction tool is explained later with reference to FIG 3A.

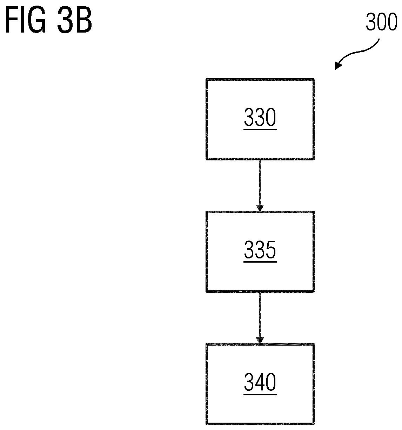

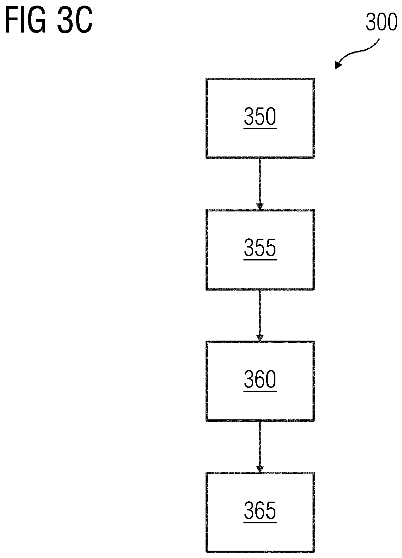

At step 210, the technical document is parsed, as explained with reference to FIG 3B, to extract at least one heading hierarchy associated with at least one sentence in the technical document. Further, the sentences in the technical document are demarcated as explained below with reference to FIG 3C. Upon demarcating the sentences, text embeddings for each of the sentences is generated using a first embedding model.

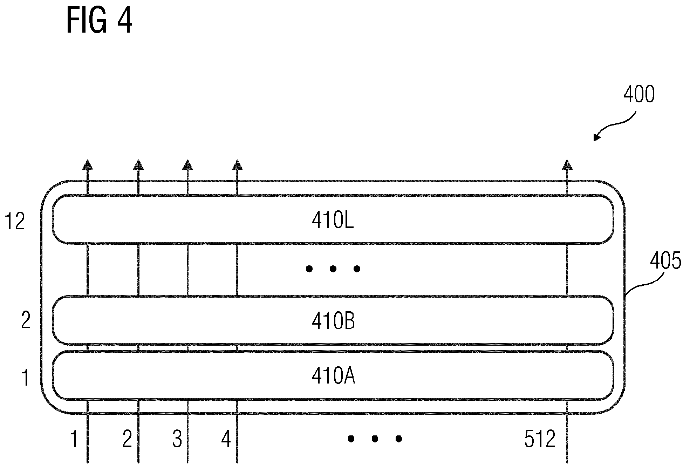

Non-limiting examples of a first embedding model may include Bag of words, FasText and Pooled word2vec and transformer-based encoder models. In a preferred embodiment, the first embedding model is a transformer-based encoder model such as Bidirectional Encoder Representation from Transformer (BERT), SciBERT, RoBERTa, Distil-BERT and XLNet. As an example, use of a BERT model for generating text embeddings is explained below with reference to FIG 4.

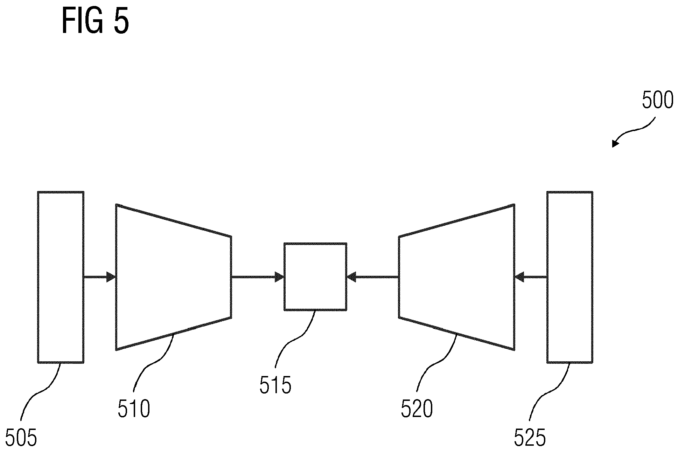

At step 215, the heading hierarchy is used to generate a heading embedding for the at least one sentence. The heading embedding is a vector representation of predefined length corresponding to the heading hierarchy. The heading embeddings are generated from the heading hierarchy, using a second embedding model. Non-limiting examples of the second embedding model include Bag of words, FasText, Pooled word2vec and autoencoder models. In a preferred embodiment, the second embedding model is an autoencoder model. As an example, training and use of an autoencoder model for generating heading embeddings is explained later with reference to FIG 5.

At step 220, the heading embedding and the text embedding of the at least one sentence is used to generate a context embedding for the at least one sentence. In a preferred embodiment, the context embedding is generated by concatenating the heading embedding and the text embedding. It may be understood by a person skilled in the art that it is possible to generate a unique context embedding by concatenating the heading embedding and the text embedding in any order or using other operations such as addition, subtraction etc. The context embedding is a vector representation of the sentence along with contextual information.

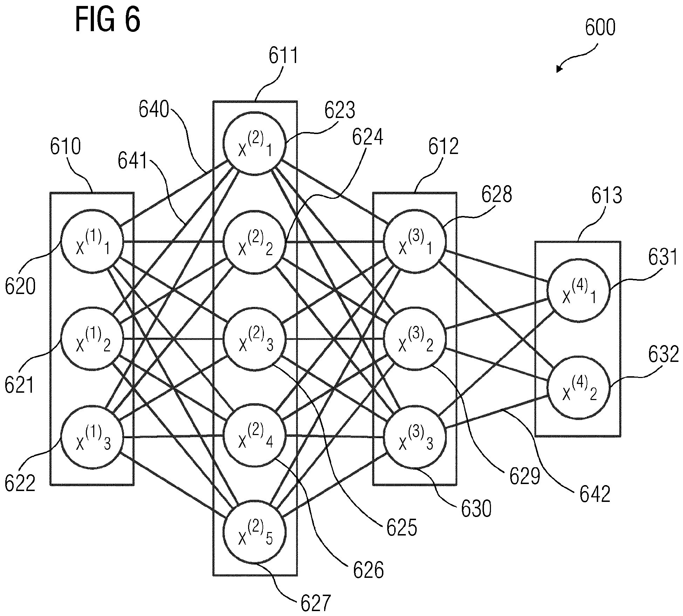

At step 225, a classifier model is applied to the context embedding to generate output data. The output data is indicative of a class associated with the sentence. The classifier model may be trained to classify context embeddings using any of the classifier algorithms, including but not limited to, decision trees, Naive Bayes classifiers, clustering algorithms (e.g., K-Nearest Neighbours (K-NN)), Support Vector Machines (SVMs) and Artificial Neural Networks (ANNs). In a preferred embodiment, the classifier model is trained based on an ANN as explained later with reference to FIG 6.

At step 230, the at least one sentence is selectively provided to the one or more output devices 117 based on the class of the at least one sentence. In an embodiment, each of the classes is associated with a unique colour code.

In an embodiment, the colour-code corresponding to the class of a given sentence is firstly identified from a first look up table stored in the database 198. Further, an area covered by the sentence in the technical document is highlighted based on the colour-code. The highlighting of the area based on the colour-code may be performed using highlighting tools such as PDF highlighter. For example, a source code of the PDF document is modified to highlight the area covered by the sentence. In an embodiment, an object recognition algorithm may be used to highlight the area covered by the sentence based on predefined rules. For example, the first class may be "Finance" highlighted in yellow, second class may be "Engineering" highlighted in green, third class may be "Legal" highlighted in blue and fourth class may be "Sales" highlighted in red. Upon highlighting, the highlighted area of the technical document is displayed on the one or more output devices 117. Advantageously, highlighting the sentences based on the colour-codes enables a class of stakeholders to focus only on the sentences highlighted under a specific class. Further, the technical document comprising the highlighted area is provided to the one or more output devices, for displaying.

In another embodiment, the sentence may be selectively stored in the database 198 based on the class of the sentence. For example, all sentences that are classified under "Engineering" and "Finance" are stored in the database 198. Further, the selectively stored data is transmitted to the one or more output devices 117 for displaying to a user. For example, a sentence of class "Engineering" may be only displayed on a first output device associated with an engineering team, a sentence of class "Finance" may be only displayed on a second output device associated with a finance team and so on. In an implementation, the output device for selectively displaying a sentence based on the class is identified using predefined IP address of the output device.. For example, the IP address corresponding to the class may be determined from a second look up table stored in the database 198.

In yet another embodiment, the class associated with the sentence is used to identify a text analysis algorithm from a plurality of domain-specific text analysis algorithms. Each of the text analysis algorithms is configured to analyse the sentence based on context-specific terms present in the sentence. For example, a first text analysis algorithm may be specific to the domain of engineering, a second text analysis algorithm may be specific to the domain of finance, and so on. The identified text analysis algorithm, upon being executed by the processing unit 120, analyse the sentence for identifying one or more technical parameters mentioned in the sentence. For example, if the class of the sentence is "Engineering", the one or more technical parameters may include tensile stress, maximum temperature etc. The values corresponding to the technical parameters may be identified based on predefined keywords, numerals or units such as Pascal, Newton/m$^2$, Celsius, Fahrenheit etc. For example, the value of tensile stress may be identified as 10 Pascals, the maximum temperature as 100 degree Celsius and so on. The units may be defined in a corpus corresponding to the domain-specific text analysis algorithm.

In a further embodiment, the one or more technical parameters identified from the technical document are used to configure a machine-executable simulation instance of a system design of the technical installation. For example, the technical parameters obtained from a sentence of class "Engineering" may be used to configure a machine-executable simulation instance of a system design of a steam turbine present in a power plant. The system design may be one of 1-dimensional model, 2-dimensional model, 3-dimensional model or a combination thereof. The system design may be firstly configured by based on values of the technical parameters obtained from the technical document. For example, the technical parameters may include dimensions and material properties of one or more components of at least the steam turbine.

Further, the simulation-instance of the updated system design is generated in a simulation environment. In an embodiment, the simulation may be performed using a computational simulation technique such as Computational Solid Mechanics (CSM) and Computational Fluid Dynamics (CFD). The simulation may be performed as 1D-simulation, 2D-simulation or 3D-simulation. Further, a behaviour of the technical installation, i.e. the steam turbine, is simulated based on the system design. The simulation may be performed to validate an industrial design process, performance analysis or for assessing safety of a technical installation designed based on the technical parameters mentioned in the technical document.

In a further embodiment, one or more key performance indicators corresponding to the one or more technical parameters is computed based an outcome of the simulation. In an implementation, simulation results may comprise numerical values indicative of one or more key performance indicators. In another example, the simulation results may be provided to one or more mathematical models to compute one or more key performance indicators.

In yet another embodiment, trends may be generated based on the one or more key performance parameters. For example, historic trends may be plotted based on similar key performance indicators extracted from a plurality of technical documents. For example, if there are a plurality of technical documents, each of which comprise requirements for gas turbines over the years 1991, 1992...2010, the historic trend may be generated based on a technical parameter such as capacity (in Megawatts) corresponding to each of the years.

FIG 3A shows a flowchart of a method 300 for extracting text from a technical document in PDF, in accordance with an exemplary embodiment of the present invention.

At step 305, the technical document in PDF is converted into Extensible Markup Language (XML) format using a text extraction tool such as pdfminer.six. The XML format is generated based on character-level information of the text in the PDF. The character-level information may include unicodes and metadata corresponding to each character.

At step 310, a raw JSON file is generated based on the encoded text. The JSON file combines datapoints at phrase-level. The conversion to raw JSON format is performed to prevent loss of information during parsing of the technical document.

At step 315, any phrase that is repetitive or is present in 80% or more of the total number of pages of the document is discarded from the XML document. This is because, such repetitive text may constitute header or footer of the document.

At step 320, unicodes corresponding to predetermined special characters such as "-", "$\varphi$", "$\eta$" etc., acronyms and units such as mm, °C, Pa etc. are replaced with corresponding strings to form phrases. The strings corresponding to the unicodes may be identified from a look up table stored in the database 198. The look up table may comprise each of the special characters, acronyms and units and their corresponding strings. Here, the corresponding string may be a word or group of words that facilitates identification of a context between two neighbouring words. For example, the unicode "\u0424" is replaced with "phi", "\ub2212" with "hyphen", "u0421" with "centigrade" etc.

FIG 3B shows a flowchart of method 325 for generating heading hierarchies, in accordance with the present invention. In order to extract the heading hierarchy, firstly text lines in the technical document are identified based on coordinates of the technical document. Further, each of the text line in the technical document is classified into at least one of a heading and a sentence, based on at least one characteristic of the text line. The at least one characteristic may include spacing, font style, font type etc. Upon identifying the sentences and headings, a heading hierarchy is generated for each of the headings. An exemplary method for generating heading hierarchies is detailed in steps 330 to 340 below.

At step 330, position of each of the phrases in the document is identified based on coordinates of the text in the document as determined using the PDF parser. Based on the position, phrases corresponding to each text line in the document are merged from left to right.

At step 335, spacing between each text line is determined based on pixels or coordinates of the text lines. The term "spacing" as used herein, refers to a vertical distance between two lines. Therefore, a text line may have two spacings, spacing with a preceding text line directly above and spacing with a succeeding text line directly below.

In an embodiment, an average spacing is determined based on two of the most frequent spacings between text lines in the technical document. For example, if the most frequent spacings are 1.5 mm and 1 mm, the average spacing may be calculated as 1.25mm ((1mm+1.5mm)/2). The frequency of spacings may be determined as a count of each of the spacings, e.g., 11 counts of 1.5 mm and 14 counts of 1 mm. In another example, if the frequency of spacings is more or less the same, then the greater spacing may be chosen as the average spacing.

Upon identifying the spacing, the text lines are merged based on a maximum line spacing and position associated with each text line. Further, if the maximum line spacing between the text line and the preceding text line is lesser than the average spacing, then the text line is merged with the preceding line above. Otherwise, if the maximum line spacing is greater than the average spacing, the text line is not merged with the preceding text line. The term "merge" as used herein refers to concatenating phrases present in two or more text lines to form a paragraph. It must be understood that, here the term "paragraph" refers to a series of phrases forming a textual paragraph of in the technical document.

At step 340, headings present in the technical document are identified. The headings are identified using predefined rules. An example of a predefined rule may be such that, if after step 335, a text line which is not concatenated with a preceding text line or a subsequent text line, may be classified as a potential heading. Further, presence of only upper-case characters and/or presence of bold characters may also be used to identify headings. Similarly, subheadings may also be identified based on predefined rules. Further, a hierarchy of headings and subheadings is identified based on similar predefined rules. The predefined rules may be based on factors including, but not limited to, font size, font style, spacing, position or numbering of the headings and/or subheadings. Upon identifying the headings and subheadings, the heading hierarchy is generated. For example, the heading hierarchy may be of the following format:

*GENERAL > ELECTRICAL > ANTICIPATED VALUES FOR LOAD ON GUARANTEE CONDITIONS > CURRENT TRANSFORMER :::*

In the above example, the main heading is GENERAL. Under GENERAL, ELECTRICAL is a subheading; under ELECTRICAL, ANTICIPATED VALUES FOR LOAD ON GUARANTEE CONDITIONS is a further subheading; and under ANTICIPATED VALUES FOR LOAD ON GUARANTEE CONDITIONS, CURRENT TRANSFORMER is a further subheading. In the above heading hierarchy format, each heading is separated from the subsequent subheading using a '>' and the end of the hierarchy is specified by the symbol ':::'.

FIG 3C shows a flowchart of a method 345 for demarcating sentences in the technical document, in accordance with an embodiment of the present invention.

At step 350, paragraphs are mapped to respective headings based on position of the paragraphs. More specifically, a paragraph identified at step 335 is linked to an immediately preceding heading identified at step 340. This step may be explained with the help of an example. For the sake of brevity, we may name the paragraphs A, B, C, D, E & F, and there are two headings Heading 1 and Heading 2 in the following order:

*i. Heading1*

- *A*
- B
- C

*ii. Heading2*

- *D*
- *E*
- F

Here, the paragraphs A, B and C are mapped to the immediately preceding heading 'Heading 1'. The paragraphs D, E and F are mapped to the heading 'Heading 2' in a similar fashion. The term "mapping" as used herein may refer to creating a software object, i.e. a data structure, to store a hierarchy of headings and paragraphs in a sequential order.
At step 355, text lines provided along with bullet points or serial numbers are mapped to the previous partial sentence. The partial sentence may be identified, for example, based on presence of a capitalized letter at the beginning, absence of a period at the end or based on presence of other punctuation marks such as a full-colon, a semi-colon or a comma. For example, the technical document may comprise the following text:

*i. Some of the uses of the MS Word tool are*

- *It can convert a word document to PDF*

- *It can be used to write technical reports*

Upon mapping the bullet points to the previous partial sentence, the text may read as below:

*i. Some of the uses of the MS Word tool are It can convert a word document to PDF*

*ii. Some of the uses of the MS Word tool are It can be used to write technical reports*

That is, the text in the bullet points are conjoined with the preceding partial sentence, in order to convert them to text lines as shown above.
At step 360, each of the text lines formed at step 355 are mapped to at least one immediately preceding heading, using metadata of the immediately preceding heading.
At step 365, sentences in the text lines are demarcated using predefined rules. In an example, the predefined rules may be implemented using "if-else" conditions used to segregate text lines where the period ('.') symbol appears, while disregarding the period symbol within acronyms such as 'i.e.', 'etc.' and 'e.g.', or within statements provided in brackets.
It may be understood by a person skilled in the art that each of the sentences demarcated are by default linked to the immediately preceding heading, due to pre-existing associations between the text lines and the immediately preceding headings. As a further step, metadata associated with heading hierarchies corresponding to the respective heading is added to the sentence, for identifying context associated with the sentence. Further, the heading hierarchy and the sentence are used to generate the contextual embedding as explained below with reference to FIGS 4 to 7.
FIG 4 illustrates an architecture of a BERT model 400 for generating text embeddings for sentences, in accordance with an exemplary embodiment of the present invention.
In the present embodiment, a BERT-base model is used. The BERT-base model consists of a Transformer 405. Here, the Transformer 405 is a deep learning model comprising 12 successive transformer layers 410A, 410B...410L each comprising 12 attention heads (not shown). The deep learning model is pretrained, based on a corpus, to generate text embeddings corresponding to a given sentence. The total number of parameters is 110 million. Each of the transformer layers 410A, 410B...410L is an encoder block. In an alternate embodiment, BERT-large model comprising 24 transformer layers may be employed for generating the text embeddings.

In order to generate the text embeddings, firstly, each of the sentences identified using method 345 are preprocessed using a standard tokenizer algorithm. Non-limiting examples of tokenizer algorithms may include Byte-Pair Encoding (BPE), Unigram, SentencePiece and the like. The tokenizer algorithm processes each of the sentences to generate a series of tokens corresponding to the sentence. It must be understood that, a sentence may be tokenized into a maximum of 512 tokens. For a given token, the input representation to the BERT-base model is constructed by summing the corresponding token embedding, segment embedding, and position embedding.

The input representations are further provided to the Transformer as indicated by the vertical lines numbered 1, 2... 512 in FIG 4. More specifically, input representation of a classification (CLS) token is provided as first input on input line 1, followed by input representations for tokens corresponding to the words in the sentence on the input lines 2, 3... 512, in the order of the words. Further, the inputs are passed to the transformer layers. Each transformer layer applies "self-attention" to generate a result.

Self-attention, sometimes called intra-attention is an attention mechanism relating different positions of a single sentence in order to compute a representation of the sentence. Each word in the sentence undergoes attention computation. Based on the attention computation, the transformer layer learns dependencies between the words in the sentence. The dependencies between the words is further used to capture the internal structure of the sentence. The result of applying self-attention is further passed through a feedforward network. The output of the feedforward network is provided to the text encoder block. Every token in the input of the encoder block is firstly embedded into a 768-long embedding vector. The Transformer outputs the embedding vector as the text embedding for the sentence, as indicated by the vertical arrows emanating from the Transformer 405.

FIG 5 illustrates a block diagram of an autoencoder model 500 for generating heading embeddings corresponding to heading hierarchies, in accordance with an embodiment of the present invention. The autoencoder model comprises an input layer 505 and an encoder unit 510. The input layer 505 is configured to receive n-dimensional inputs corresponding to a heading hierarchy. The encoder unit 510 is implemented using an Long Short-Term Memory (LSTM) network (not shown) and a fully connected layer (not shown). The encoder unit 510 is trained to generate a compressed low dimensional encoding 515 of the input provided via the input layer 505. For example, the compressed encoding 515 may be m-dimensional.

The autoencoder model 500 further comprises a decoder unit 520, also implemented using an LSTM network (not shown) and a fully connected layer (not shown). In an alternate embodiment, a bidirectional LSTM network may be employed for the encoder unit 510 and the decoder unit 520. More specifically, the structure of the decoder unit 520 is a mirrored form of the encoder unit 510. The decoder unit 520 attempts to reconstruct the input, by decompressing the m-dimensional encoding 515 back to an n-dimensional output. Further, the output of the decoder unit 520 is provided via an output layer 525 of the autoencoder model 500.

Here, the encoder unit 510 is firstly trained to compress inputs provided via the input layer 505, using a plurality of sentences. In particular, the encoder unit 510 is trained using unsupervised learning. The LSTM network within the encoder unit 510 is configured to support sequential data present in the input sentences. The LSTM network identifies patterns in the input sentences and extracts at least one feature indicative of the patterns in each of the input sentences. Further, a vector embedding corresponding to each of the features is generated through the fully-connected layer of the encoder unit 510. This vector embedding forms the m-dimensional encoding 515 of the sentence.

During training phase, the m-dimensional encoding 515 is further passed onto the decoder unit 520. The decoder unit 520 attempts to reconstruct the input sentence from the m-dimensional encoding 515. The LSTM network in the encoder unit 510 maintains constant backward flow in the error signal that enables it to learn long-term dependencies. An error signal corresponding to differences between the input sentence provided and the sentence reconstructed by the decoder unit 520, is further used to correct weights associated with the LSTM network in the encoder unit 510. The process of correcting errors is repeated using different sets of sentences until the encoder unit 510 is trained to generate word-level embeddings to a predefined level of accuracy.

Upon training, the input layer 505 and the encoder unit 510 is used for encoding heading embeddings corresponding to heading hierarchies. More specifically, the m-dimensional encoding generated by the encoder unit 510 corresponding to a heading hierarchy forms the heading embedding. It may occur that headings may be absent for say, a first paragraph, in certain technical documents. In such cases, heading hierarchy is not generated for the first paragraph and the heading embedding may be, by default, taken as an empty vector [0,0,0,..].

FIG 6 illustrates an embodiment of an artificial neural network 600. Alternative terms for "artificial neural network" are "neural network", "artificial neural net" or "neural net".

The artificial neural network 600 comprises nodes 620, ..., 632 and edges 640, ..., 642, wherein each edge 640, ..., 642 is a directed connection from a first node 620, ..., 632 to a second node 620, ..., 632. In general, the first node 620, ..., 632 and the second node 620, ..., 632 are different nodes 620, ..., 632, it is also possible that the first node 620, ..., 632 and the second node 620, ..., 632 are identical. For example, in FIG 6 the edge 640 is a directed connection from the node 620 to the node 623, and the edge 642 is a directed connection from the node 630 to the node 632. An edge 640, ..., 642 from a first node 620, ..., 632 to a second node 620, ..., 632 is also denoted as "ingoing edge" for the second node 620, ..., 632 and as "outgoing edge" for the first node 620, ..., 632.

In this embodiment, the nodes 620, ..., 632 of the artificial neural network 600 may be arranged in layers 610, ..., 613, wherein the layers may comprise an intrinsic order introduced by the edges 640, ..., 642 between the nodes 620, ..., 632. In particular, edges 640, ..., 642 may exist only between neighboring layers of nodes. In the displayed embodiment, there is an input layer 610 comprising only nodes 620, ..., 622 without an incoming edge, an output layer 613 comprising only nodes 631, 632 without outgoing edges, and hidden layers 611, 612 in-between the input layer 610 and the output layer 613. In general, the number of hidden layers 611, 612 may be chosen arbitrarily. The number of nodes 620, ..., 622 within the input layer 610 usually relates to the number of input values of the neural network, and the number of nodes 631, 632 within the output layer 613 usually relates to the number of output values of the neural network.

In particular, a (real) number may be assigned as a value to every node 620, ..., 632 of the neural network 600. Here, $x^{(n)}_i$ denotes the value of the i-th node 620, ..., 632 of the n-th layer 610, ..., 613. The values of the nodes 620, ..., 622 of the input layer 610 are equivalent to the input values of the neural network 600, the values of the nodes 631, 632 of the output layer 613 are equivalent to the output value of the neural network 600. Furthermore, each edge 640,..., 642 may comprise a weight being a real number, in particular, the weight is a real number within the interval [-1, 1] or within the interval [0, 1]. Here, $w^{(m,n)}_{i,j}$ denotes the weight of the edge between the i-th node 620, ..., 632 of the m-th layer 610, ..., 613 and the j-th node 620, ..., 632 of the n-th layer 610, ..., 613. Furthermore, the abbreviation $w^{(n)}_{i,j}$ is defined for the weight $w^{(n,n+1)}_{i,j}$.

In particular, to calculate the output values of the neural network 600, the input values are propagated through the neural network. In particular, the values of the nodes 620, ..., 632 of the (n+1)-th layer 610, ..., 613 may be calculated based on the values of the nodes 620, ..., 632 of the n-th layer 610, ..., 613 by:

$$x_j^{(n+1)} = f\left(\sum x^{(n)}_i \cdot w^{(n)}_{i,j}\right) \tag{1}$$

Herein, the function f is a transfer function (another term is "activation function"). Known transfer functions are step functions, sigmoid function (e.g. the logistic function, the generalized logistic function, the hyperbolic tangent, the Arctangent function, the error function, the smoothstep function) or rectifier (ReLU) functions.

The transfer function is mainly used for normalization purposes. In particular, the values are propagated layer-wise through the neural network, wherein values of the input layer 610 are given by the input of the neural network 600, wherein values of the first hidden layer 611 may be calculated based on the values of the input layer 610 of the neural network, wherein values of the second hidden layer 612 may be calculated based in the values of the first hidden layer 611, etc. In order to set the values $w^{(m,n)}_{i,j}$ for the edges, the neural network 600 has to be trained using training data. In particular, training data comprises training input data and training output data (denoted as $t_i$). For a training step, the neural network 600 is applied to the training input data to generate calculated output data. In particular, the training data and the calculated output data comprise a number of values, said number being equal with the number of nodes of the output layer 613. In particular, a comparison between the calculated output data and the training data is used to recursively adapt the weights within the neural network 600 (backpropagation algorithm). In particular, the weights are changed according to:

$$w'^{(n)}_{i,j} = w^{(n)}_{i,j} - \gamma \cdot \delta^{(n)}_j \cdot x^{(n)}_i \tag{2}$$

wherein $\gamma$ is a learning rate, and the numbers $\delta^{(n)}_j$ may be recursively calculated as:

$$\delta^{(n)}_j = \left(\sum_k \delta_{(n+1)}^k \cdot w^{(n+1)}_{j,k}\right) \cdot f'\left(\sum_i x^{(n)}_i \cdot w^{(n)}_{i,j}\right) \tag{3}$$

based on $\delta^{(n+1)}_j$, if the (n+1)-th layer is not the output layer; and

$$\delta^{(n)}_j = \left(x^{(n+1)}_k - t^{(n+1)}_j\right) \cdot f'\left(\sum_i x^{(n)}_i \cdot w^{(n)}_{i,j}\right) \tag{4}$$

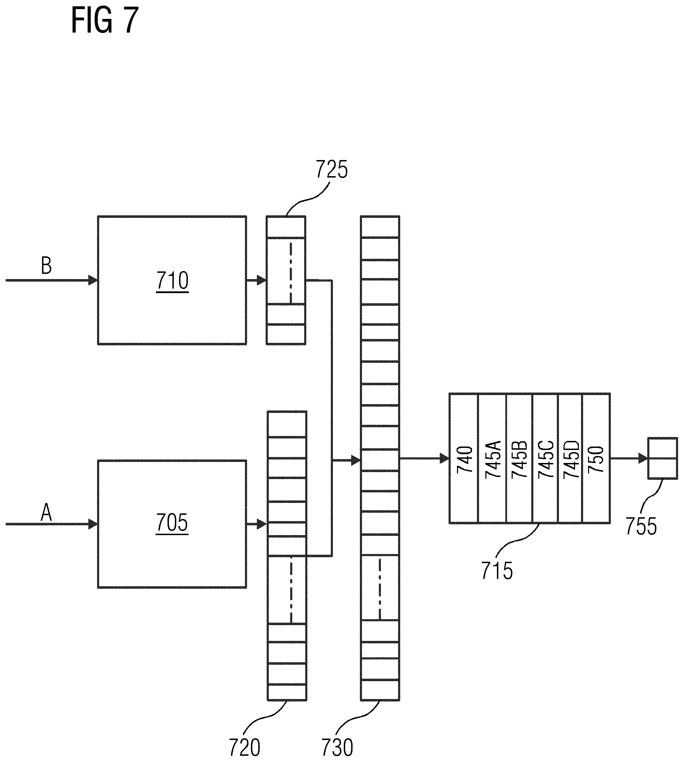

if the (n+1)-th layer is the output layer 613, wherein f' is the first derivative of the activation function, and $t^{(n+1)}_j$ is the comparison training value for the j-th node of the output layer 613. FIG 7 shows a workflow 700 for classifying sentences based on text embeddings and heading embeddings, in accordance with an exemplary embodiment of the present invention. The workflow 700 comprises a BERT encoder 705 (similar to BERT encoder 400), an autoencoder model 710 (similar to autoencoder model 500) and a neural network-based classifier model 715 (similar to neural network 600).

Here, the BERT model 705 generates a 768-long text embedding of an input sentence A. The 768-long text embedding is further flattened to generate a 1×768-dimensional text embedding 720. Further, based on metadata associated with the sentence, a corresponding heading hierarchy B is identified. Further, the heading hierarchy B is provided as input to the autoencoder model 710 to generate a 200-long heading embedding. The 200-long heading embedding is further flattened to generate a 1×200-dimensional heading embedding 725. The 1×768-dimensional text embedding 720 and the 1×200-dimensional heading embedding 725 are further concatenated to generate a 1×968-dimensional context embedding 730 for the sentence. Further, 1×968-dimensional context embedding 730 is provided as input to the classifier model 715.

In the present embodiment, the classifier model 715 may include an input layer 740, four hidden layers 745A-D and an output layer 750. The transfer function for each of the hidden layers 745A-D is a ReLU activation function. Here, the input layer 740 comprises 968 nodes. The first hidden layer 745A comprises 256 nodes that generate 256 output values based on the 968 input values received from the input layer 740 using the ReLU activation function. The second hidden layer 745B comprises 128 nodes generate 128 output values based on the 256 input values from the first hidden layer 745A using the ReLU activation function. The third hidden layer 745C comprises 64 nodes that generates 64 output values based on the 128 input values from the second hidden layer 745B using the ReLU activation function. The fourth hidden layer 745D comprises 32 nodes that generate 2 output values based on the 64 input values from the third hidden layer 745C using the ReLU activation function. The output layer 750 further uses Softmax activation function to generate a final output 755 indicative of a class of the sentence. In the present example, the final output 755 is a 2-long vector that indicates a probability associated with a specific class. For example, if there are two classes in total, the final output comprises probabilities of the sentence falling into each of the classes. For example, if probability of a first class is 0.75 and the probability of a second class is 0.25, the sentence is classified under the first class. In an embodiment, the sentences in the technical document is highlighted based on colour-code associated with the respective classes of the sentences. In addition, one or more key performance indicators may also be computed by performing simulations based on one or more technical parameters present in the technical document. In an example, a dashboard indicating the key performance indicators along with the highlighted text, may be generated on one or more output devices.

Advantageously, the present invention facilitates extracting context-relevant information from a technical document comprising text-based specifications associated with a technical installation. Further, the present invention also facilitates simulating a behaviour of the technical installation by performing simulations based on technical parameters in the text-based specification. Further, the present invention also facilitates automated computing of key-performance indicators based on the simulations, to guide a human operator in making decisions.

While the invention has been illustrated and described in detail with the help of a preferred embodiment, the invention is not limited to the disclosed examples. Other variations may be deducted by those skilled in the art without leaving the scope of protection of the claimed invention.

**Claims**

1. A computer-implemented method for managing information present in a technical document, the method comprising:

   receiving, by a processing unit (120), the technical document from a source, wherein the technical document comprises text-based specifications associated with a technical installation;
   parsing the technical document to extract at least one heading hierarchy associated with at least one sentence in the technical document;
   using the heading hierarchy to generate a heading embedding for the at least one sentence, wherein the heading embedding is a vector representation of predefined length corresponding to the heading hierarchy;
   using the heading embedding and a text embedding of the at least one sentence to generate a context embedding for the at least one sentence;
   applying a classifier model (715) to the context embedding to generate output data, wherein the output data is indicative of a class associated with the at least one sentence; and
   selectively providing the at least one sentence to one or more output devices (117) based on the class of the at least one sentence.

2. The method according to claim 1, wherein parsing the technical document to extract at least the heading hierarchy associated with the at least one sentence comprises:

identifying a plurality of text lines present in the technical document based on coordinates of the technical document, wherein each of the text lines comprise text present in a row of the technical document;

classifying each of the text lines into at least one of a heading and a sentence, based on at least one characteristic of the text line; and

generating a heading hierarchy from one or more text lines classified as headings, using a predefined rule.

3. The method according to claims 1 and 2, further comprising:
mapping each of the text lines classified as a sentence, to at least one immediately preceding heading, using metadata of the immediately preceding heading.

4. The method according to any one of the claims 1 to 3, wherein the text embedding of the at least one sentence is generated using a first embedding model (705).

5. The method according to any one of the claims 1 to 4, wherein the heading embedding for the at least one sentence is generated from the heading hierarchy using a second embedding model (710).

6. The method according to any one of the claims 1 to 5, wherein using the heading embedding and the text embedding of the at least one sentence to generate the context embedding for the at least one sentence, comprises:
concatenating the heading embedding and the text embedding of the at least one sentence to form the context embedding for the sentence.

7. The method according to any one of the claims 1 to 6, wherein the classifier model is trained based on at least one of Artificial Neural Networks, decision trees, Naive Bayes classifiers, clustering algorithms and Support Vector Machines.

8. The method according to any one of the claims 1 to 7, wherein selectively providing the at least one sentence to the one or more output devices (117) based on the class of the at least one sentence, comprises:

identifying a colour-code corresponding to the class of the sentence from a lookup table; and

highlighting an area covered by the sentence in the technical document based on the colour-code; and

displaying the technical document comprising the highlighted area via the one or more output devices (117) .

9. The method according to any one of the claims 1 to 8, wherein selectively providing the at least one sentence to the one or more output devices (117) based on the class of the at least one sentence, comprises:

selectively storing the sentence in a database (198) based on the class of the sentence; and

transmitting the selectively stored sentence to the one or more output devices (117) for displaying to a user.

10. The method according to any one of the claims 1 to 9, further comprising:

identifying a text analysis algorithm corresponding to the determined class of the at least one sentence;

using the identified text analysis algorithm to analyse the sentence for identifying one or more technical parameters mentioned in the sentence.

11. The method according to claims 1 and 10, further comprising:

using the one or more technical parameters identified to configure a machine-executable simulation instance of a system design of the technical installation;

simulating a behaviour of the technical installation, based on the system design;

computing at least one key performance indicator corresponding to the one or more technical parameters based on an outcome of the simulation; and

providing a notification indicative of the at least one key performance indicator on the one or more output devices (117).

12. An apparatus (105) for managing information in a technical document, the apparatus (105) comprising:

one or more processing units (120); and

a memory unit (125) operatively coupled to the one or more processing units (120), wherein the memory unit (125) comprises an information management module (160) stored in the form of machine-readable instructions executable by the one or more processing units (120), wherein the information management module (160) is configured to perform method steps according to any of the claims 1 to 11.

13. A system (100) for managing information present in a technical document, the system (100) comprising:

a source (110) configured to provide a technical document, the technical document comprises text-based specifications associated with a technical installation; and
an apparatus (105) according to claim 12, communicatively coupled to the source (110), wherein the apparatus (105) is configured to manage information present in the technical document, according to any of the method claims 1 to 11; and
one or more output devices (117) communicatively coupled to the apparatus (105).

14. A computer-program having machine-readable instructions, which when executed by one or more computing devices, cause the one or more computing devices to perform a method according to any of the claims 1 to 11.

15. A machine-readable storage medium comprising a computer-program according to claim 14.

FIG 1A

# FIG 1B

FIG 2

200

```
┌─────────┐
│   205   │
└─────────┘
     │
     ▼
┌─────────┐
│   210   │
└─────────┘
     │
     ▼
┌─────────┐
│   215   │
└─────────┘
     │
     ▼
┌─────────┐
│   220   │
└─────────┘
     │
     ▼
┌─────────┐
│   225   │
└─────────┘
     │
     ▼
┌─────────┐
│   230   │
└─────────┘
```

FIG 3A

300

305

310

315

320

FIG 3B

300

330

335

340

# FIG 3C

300

```
┌─────────┐
│   350   │
└─────────┘
     │
     ▼
┌─────────┐
│   355   │
└─────────┘
     │
     ▼
┌─────────┐
│   360   │
└─────────┘
     │
     ▼
┌─────────┐
│   365   │
└─────────┘
```

FIG 4

FIG 5

500

505  510  515  520  525

FIG 6

FIG 7

Europäisches
Patentamt

European
Patent Office

Office européen
des brevets

# EUROPEAN SEARCH REPORT

Application Number

EP 22 17 1631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Christian Hofer: "Development of a structure-aware PDF Parser ¦", , 6 September 2020 (2020-09-06), XP055967955, Retrieved from the Internet: URL:https://medium.com/@_chriz_/developmen t-of-a-structure-aware-pdf-parser-7285f3fe 41a9 [retrieved on 2022-10-04] * the whole document * | 1-9, 12-15 | INV. G06F40/106 G06F40/137 G06F40/14 G06F40/284 G06F40/295 G06N3/02 |
| X | Anonymous: "How to extract and structure text from PDF files with Python and machine learning", , 25 February 2022 (2022-02-25), XP055967967, Retrieved from the Internet: URL:https://www.posos.co/blog/how-to-extra ct-and-structure-text-from-pdf-files-with- python-and-machine-learning [retrieved on 2022-10-04] * the whole document * | 1-9, 12-15 | |
| X | JOHANNES RAUSCH ET AL: "DocParser: Hierarchical Structure Parsing of Document Renderings", ARXIV.ORG, CORNELL UNIVERSITY LIBRARY, 201 OLIN LIBRARY CORNELL UNIVERSITY ITHACA, NY 14853, 25 January 2021 (2021-01-25), XP081864612, * section 2 * | 1-9, 12-15 | |
| X | US 2002/118379 A1 (CHAKRABORTY AMIT [US] ET AL) 29 August 2002 (2002-08-29) * paragraphs [0045] – [0050] * | 1-9, 12-15 | |

TECHNICAL FIELDS SEARCHED (IPC)

G06F
G06N

The present search report has been drawn up for all claims

| Place of search | Date of completion of the search | Examiner |
|---|---|---|
| The Hague | 5 October 2022 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 22 17 1631

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-9(completely); 12-15(partially)**

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

Application Number

EP 22 17 1631

The Search Division considers that the present European patent application does not comply with the requirements of unity of invention and relates to several inventions or groups of inventions, namely:

```
1. claims: 1-9(completely); 12-15(partially)

        Inferring heading hierarchies from text documents
                        ---


2. claims: 10, 11(completely); 12-15(partially)

        Simulation of technical designs based on a text document
                        ---
```

## ANNEX TO THE EUROPEAN SEARCH REPORT
## ON EUROPEAN PATENT APPLICATION NO.

EP 22 17 1631

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2022

| Patent document cited in search report | | Publication date | Patent family member(s) | Publication date |
|---|---|---|---|---|
| US 2002118379 | A1 | 29-08-2002 | DE 10162156 A1 | 25-07-2002 |
| | | | US 2002118379 A1 | 29-08-2002 |

EPO FORM P0459

For more details about this annex : see Official Journal of the European Patent Office, No. 12/82